# EUROPEAN PATENT APPLICATION

(11) **EP 4 385 716 A1**
(43) Date of publication of application: **19.06.2024**
(21) Application number: 22306845.3
(22) Date of filing: 12.12.2022
(51) Int. Cl.: B29D 11/00, G05B 19/404

(54) **DETERMINATION OF AN OPTICAL LENS MACHINING PROCESS SIGNATURE**

(71) Applicant: Essilor International, 94220 Charenton-Le-Pont (FR)
(72) Inventor: BOLTEAU, Guillaume, 94210 La Varenne Saint Hilaire (FR)
(74) Representative: Cabinet Novitech

(57) **Abstract**

System for determining a signature of an optical lens machining process, the system being configured to:
- determine:
• at least two error maps associated respectively with at least two optical lenses machined using the optical lens machining process,
• at least one surfacing defect in a first of the at least two error maps,
• at least one surfacing defect in a second of the at least two error maps,

- remove from the first of the at least two error maps the at least one surfacing defect in the first of the at least two error maps to obtain a first updated error map,
- remove from the second of the at least two error maps the at least one surfacing defect in the second of the at least two error maps to obtain a second updated error map,
- determine the signature of the optical lens machining process by averaging at least the first updated error map and the second updated error map.

## Description

### TECHNICAL FIELD

The disclosure relates to the field of the manufacturing of optical lenses. The disclosure relates to a system for determining an optical lens machining process signature and to a method for determining an optical lens machining process signature.

### BACKGROUND

Optical prescription laboratories produce optical lenses with optical power prescribed in an order with some tolerances.

Due to deviation in the surfacing processes, optical properties such as optical powers, measured at different referenced points, are not always within these tolerances.

A statistical analysis is usually performed manually or automatically by process engineers in optical prescription laboratories to determine the distribution of lens power deviations between the nominal optical powers and the achieved optical powers. Using this statistical analysis, the process engineer may determine the average deviation and then statically define compensations to be applied in a Lens Design System (LDS) or optical calculator.

However, this compensation is done on a single point and thus cannot handle different deviations according to different zones of the lens.

Therefore, there is a need to determine the process signature of an optical lens machining process, for example to compensate the deviations of the manufacturing process for the subsequent manufactured lenses.

### SUMMARY

To this end, a system for determining a signature of an optical lens machining process is disclosed. According to the disclosure, the system for determining a signature of an optical lens machining process is at least configured to:
- determine:
   - at least two error maps associated respectively with at least two optical lenses machined using the optical lens machining process,
   - at least one surfacing defect in a first of the at least two error maps,
   - at least one surfacing defect in a second of the at least two error maps,
- remove from the first of the at least two error maps the at least one surfacing defect in the first of the at least two error maps to obtain a first updated error map,
- remove from the second of the at least two error maps the at least one surfacing defect in the second of the at least two error maps to obtain a second updated error map,
- determine the signature of the optical lens machining process by averaging at least the first updated error map and the second updated error map.

Therefore, the disclosed solution allows determining a signature process an optical lens machining process.

According to further embodiments which can be considered alone or in combination:
- the first of the at least two error maps is associated with a first of the at least two optical lenses, the first of the at least two error maps being determined by subtracting a first target map and a first optical parameter map, the first optical parameter map comprising values of an optical parameter of the first of the at least two optical lenses at a plurality of control points, the first target map comprising first target values of the optical parameter at the plurality of the control points,
- the second of the at least two error maps is associated with a second of the at least two optical lenses, the second error map being determined by subtracting a second target map and a second optical parameter map, the second optical parameter map comprising values of an optical parameter of the second of the at least two optical lenses at the plurality of the control points, the second target map comprising second target values of the optical parameter at the plurality of the control points; and/or

- the optical parameter of the first of the at least two optical lenses comprises parameters representing optical powers of the first of the at least two optical lenses at the plurality of the control points and/or the optical parameter of the second of the at least two optical lenses comprising parameters representing optical powers of the second of the at least two optical lenses at the plurality of the control points; and/or
- the parameters representing the optical powers of the first of the at least two optical lenses at the plurality of the control points are characterized by a mean sphere, a mean cylinder and/or a mean axis and/or the optical powers of the second of the at least two optical lenses at the plurality of the control points are characterized by a mean sphere, a mean cylinder and/or a mean axis; and/or
- the system is configured to average the first updated error map and the second updated error map by averaging, for at least one of the control points, a value at the at least one of the control points of the first updated error map and a value at the at least one of the control points of the second updated error map; and/or
- the averaging of a value at the at least one of the control points of the first updated error map and a value at the at least one of the control points of the second updated error map is based on a weighting sum taking into account a first quality score associated with the first updated error map and a second quality score associated with the second updated error map; and/or
- the optical lens is a single vision lens or a progressive addition lens or a multifocal lens; and/or
- the distance between two control points is greater than or equal to 1 µm and smaller than or equal to 30 mm; and/or
- the at least one surfacing defect in the first of the at least two error maps comprises first surfacing rings and/or first center defects and/or wherein the at least one surfacing defect in the second of the at least two error maps comprises second surfacing rings and/or second center defects; and/or
- the system is configured to:
   - compare the value of the optical parameter at at least some of the control points with an optical parameter withdraw threshold, and
   - withdraw from the averaging of the updated error maps the updated error map that have an optical parameter at at least some of the control points greater than or equal to the optical parameter withdraw threshold; and/or
- the system is configured to
   - compare the value of the optical parameter at at least some of the control points with an optical parameter correction threshold
   - prior to averaging of the updated error maps, correct the updated error map that have an optical parameter at at least some of the control points greater than or equal to the optical parameter correction threshold.

The disclosure further relates to a system for compensating a signature of an optical lens machining process, , the system being configured to:
- determine
   - at least two error maps associated respectively with at least two optical lenses machined using the optical lens machining process
   - at least one surfacing defect in a first of the at least two error maps,
   - at least one surfacing defect in a second of the at least two error maps,
- remove from the first of the at least two error maps the at least one surfacing defect in the first of the at least two error maps to obtain a first updated error map,
- remove from the second of the at least two error maps the at least one surfacing defect in the second of the at least two error maps to obtain a second updated error map,
- determine the signature of the optical lens machining process by averaging at least the first updated error map and the second updated error map,
wherein the system is further configured to use the signature of the optical lens machining process to adapt the optical lens machining process when used to machine a third optical lens such that a third optical parameter map of the third optical lens is closer to a third target map than what the first optical parameter map is from the first target map or what the second optical parameter map is from the second target map, the third optical parameter map comprising values of an optical parameter of the third optical lens at the plurality of the control points, the third target map comprising third target values of the optical parameter at the plurality of the control points.

According to further embodiments which can be considered alone or in combination:
- the first of the at least two error maps is associated with a first of the at least two optical lenses, the first of the at least two error maps being determined by subtracting a first target map and a first optical parameter map, the first optical parameter map comprising values of an optical parameter of the first of the at least two optical lenses at a plurality of control points, the first target map comprising first target values of the optical parameter at the plurality of the control points,
- the second of the at least two error maps is associated with a second of the at least two optical lenses, the second error map being determined by subtracting a second target map and a second optical parameter map, the second optical parameter map comprising values of an optical parameter of the second of the at least two optical lenses at the plurality of the control points, the second target map comprising second target values of the optical parameter at the plurality of the control points; and/or
- the optical parameter of the first of the at least two optical lenses comprise parameters representing optical powers of the first of the at least two optical lenses at the plurality of the control points and/or the optical parameter of the second of the at least two optical lenses comprising parameters representing optical powers of the second of the at least two optical lenses at the plurality of the control points; and/or
- the parameters representing the optical powers of the first of the at least two optical lenses at the plurality of the control points are characterized by a mean sphere, a mean cylinder and/or a mean axis and/or the optical powers of the second of the at least two optical lenses at the plurality of the control points are characterized by a mean sphere, a mean cylinder and/or a mean axis; and/or
- the system is configured to average the first updated error map and the second updated error map by averaging, for at least one of the control points, a value at the at least one of the control points of the first updated error map and a value at the at least one of the control points of the second updated error map; and/or
- the averaging of a value at the at least one of the control points of the first updated error map and a value at the at least one of the control points of the second updated error map is based on a weighting sum taking into account a first quality score associated with the first updated error map and a second quality score associated with the second updated error map; and/or
- the optical lens is a single vision lens or a progressive addition lens or a multifocal lens; and/or
- the distance between two control points is greater than or equal to 1 µm and smaller than or equal to 30 mm; and/or
- the at least one surfacing defect in the first of the at least two error maps comprises first surfacing rings and/or first center defects and/or wherein the at least one surfacing defect in the second of the at least two error maps comprises second surfacing rings and/or second center defects; and/or
- the system is configured to:
   - compare the value of the optical parameter at at least some of the control points with an optical parameter withdraw threshold, and
   - withdraw from the averaging of the updated error maps the updated error map that have an optical parameter at at least some of the control points greater than or equal to the optical parameter withdraw threshold; and/or
- the system is configured to
   - compare the value of the optical parameter at at least some of the control points with an optical parameter correction threshold
   - prior to averaging of the updated error maps, correct the updated error map that have an optical parameter at at least some of the control points greater than or equal to the optical parameter correction threshold.

The disclosure further relates to method for determining an optical lens machining process signature, the method comprising:
- determining:
   ∘ at least two error maps associated respectively with at least two optical lenses machined using the optical lens machining process,
   ∘ at least one surfacing defect in a first of the at least two error maps,
   ∘ at least one surfacing defect in a second of the at least two error maps,
- removing from the first of the at least two error maps the at least one surfacing defect in the first of the at least two error maps to obtain a first updated error map,
- removing from the second of the at least two error maps the at least one surfacing defect in the second of the at least two error maps to obtain a second updated error map,
- determining the signature of the optical lens machining process by averaging at least the first updated error map and the second updated error map.

According to further embodiments which can be considered alone or in combination:
- the first of the at least two error maps is associated with a first of the at least two optical lenses, the first of the at least two error maps being determined by subtracting a first target map and a first optical parameter map, the first optical parameter map comprising values of an optical parameter of the first of the at least two optical lenses at a plurality of control points, the first target map comprising first target values of the optical parameter at the plurality of the control points,
- the second of the at least two error maps is associated with a second of the at least two optical lenses, the second error map being determined by subtracting a second target map and a second optical parameter map, the second optical parameter map comprising values of an optical parameter of the second of the at least two optical lenses at the plurality of the control points, the second target map comprising second target values of the optical parameter at the plurality of the control points; and/or
- the optical parameter of the first of the at least two optical lenses comprises parameters representing optical powers of the first of the at least two optical lenses at the plurality of the control points and/or the optical parameter of the second of the at least two optical lenses comprising parameters representing optical powers of the second of the at least two optical lenses at the plurality of the control points; and/or
- the parameters representing the optical powers of the first of the at least two optical lenses at the plurality of the control points are characterized by a mean sphere, a mean cylinder and/or a mean axis and/or the optical powers of the second of the at least two optical lenses at the plurality of the control points are characterized by a mean sphere, a mean cylinder and/or a mean axis; and/or
- the method is configured to average the first updated error map and the second updated error map by averaging, for at least one of the control points, a value at the at least one of the control points of the first updated error map and a value at the at least one of the control points of the second updated error map; and/or
- the averaging of a value at the at least one of the control points of the first updated error map and a value at the at least one of the control points of the second updated error map is based on a weighting sum taking into account a first quality score associated with the first updated error map and a second quality score associated with the second updated error map; and/or
- the optical lens is a single vision lens or a progressive addition lens or a multifocal lens; and/or
- the distance between two control points is greater than or equal to 1 µm and smaller than or equal to 30 mm; and/or
- the at least one surfacing defect in the first of the at least two error maps comprises first surfacing rings and/or first center defects and/or wherein the at least one surfacing defect in the second of the at least two error maps comprises second surfacing rings and/or second center. defects; and/or
- the method is configured to:
   - compare the value of the optical parameter at at least some of the control points with an optical parameter withdraw threshold, and
   - withdraw from the averaging of the updated error maps the updated error map that have an optical parameter at at least some of the control points greater than or equal to the optical parameter withdraw threshold; and/or
- the method is configured to
   - compare the value of the optical parameter at at least some of the control points with an optical parameter correction threshold
   - prior to averaging of the updated error maps, correct the updated error map that have an optical parameter at at least some of the control points greater than or equal to the optical parameter correction threshold.

The disclosure further relates to a method for compensating a signature of an optical lens machining process the method comprising:
- machining at least two optical lenses using the optical lens machining process,
- determining the optical lens machining process signature comprising:
   - determining
      ∘ at least two error maps associated respectively with the at least two optical lenses machined using the optical lens machining process
      ∘ at least one surfacing defect in a first of the at least two error maps,
      ∘ at least one surfacing defect in a second of the at least two error maps,
   - removing from the first of the at least two error maps the at least one surfacing defect in the first of the at least two error maps to obtain a first updated error map,
   - removing from the second of the at least two error maps the at least one surfacing defect in the second of the at least two error maps to obtain a second updated error map,
   - determining the signature of the optical lens machining process by averaging at least the first updated error map and the second updated error map,
- recording the optical lens machining process signature,
wherein, the method further comprises:
- using the signature of the optical lens machining process to adapt the optical lens machining process when used to machine a third optical lens such that a third optical parameter map of the third optical lens is closer to a third target map than what the first optical parameter map is from the first target map or what the second optical parameter map is from the second target map, the third optical parameter map comprising values of an optical parameter of the third optical lens at the plurality of the control points, the third target map comprising third target values of the optical parameter at the plurality of the control points.

According to further embodiments which can be considered alone or in combination:
- the first of the at least two error maps is associated with a first of the at least two optical lenses, the first of the at least two error maps being determined by subtracting a first target map and a first optical parameter map, the first optical parameter map comprising values of an optical parameter of the first of the at least two optical lenses at a plurality of control points, the first target map comprising first target values of the optical parameter at the plurality of the control points,
- the second of the at least two error maps is associated with a second of the at least two optical lenses, the second error map being determined by subtracting a second target map and a second optical parameter map, the second optical parameter map comprising values of an optical parameter of the second of the at least two optical lenses at the plurality of the control points, the second target map comprising second target values of the optical parameter at the plurality of the control points; and/or
- the optical parameter of the first of the at least two optical lenses comprises parameters representing optical powers of the first of the at least two optical lenses at the plurality of the control points and/or the optical parameter of the second of the at least two optical lenses comprising parameters representing optical powers of the second of the at least two optical lenses at the plurality of the control points; and/or
- the parameters representing the optical powers of the first of the at least two optical lenses at the plurality of the control points are characterized by a mean sphere, a mean cylinder and/or a mean axis and/or the optical powers of the second of the at least two optical lenses at the plurality of the control points are characterized by a mean sphere, a mean cylinder and/or a mean axis; and/or
- the method is configured to average the first updated error map and the second updated error map by averaging, for at least one of the control points, a value at the at least one of the control points of the first updated error map and a value at the at least one of the control points of the second updated error map; and/or
- the averaging of a value at the at least one of the control points of the first updated error map and a value at the at least one of the control points of the second updated error map is based on a weighting sum taking into account a first quality score associated with the first updated error map and a second quality score associated with the second updated error map; and/or
- the optical lens is a single vision lens or a progressive addition lens or a multifocal lens; and/or
- the distance between two control points is greater than or equal to 1 µm and smaller than or equal to 30 mm; and/or
- the at least one surfacing defect in the first of the at least two error maps comprises first surfacing rings and/or first center defects and/or wherein the at least one surfacing defect in the second of the at least two error maps comprises second surfacing rings and/or second center. defects; and/or
- the method is configured to:
   - compare the value of the optical parameter at at least some of the control points with an optical parameter withdraw threshold, and
   - withdraw from the averaging of the updated error maps the updated error map that have an optical parameter at at least some of the control points greater than or equal to the optical parameter withdraw threshold; and/or
- the method is configured to
   - compare the value of the optical parameter at at least some of the control points with an optical parameter correction threshold
   - prior to averaging of the updated error maps, correct the updated error map that have an optical parameter at at least some of the control points greater than or equal to the optical parameter correction threshold.

The disclosure further relates to a computer program product comprising one or more stored sequences of instructions that are accessible to a processor and which, when executed by the processor, causes the processor to carry out at the steps of a method for determining a signature of an optical lens machining process, the method comprising:
- determining:
   ∘ at least two error maps associated respectively with at least two optical lenses machined using the optical lens machining process
   ∘ at least one surfacing defect in a first of the at least two error maps,
   ∘ at least one surfacing defect in a second of the at least two error maps,
- removing from the first of the at least two error maps the at least one surfacing defect in the first of the at least two error maps to obtain a first updated error map,
- removing from the second of the at least two error maps the at least one surfacing defect in the second of the at least two error maps to obtain a second updated error map,
- determining the signature of the optical lens machining process by averaging at least the first updated error map and the second updated error map.

According to further embodiments which can be considered alone or in combination:
- the first of the at least two error maps is associated with a first of the at least two optical lenses, the first of the at least two error maps being determined by subtracting a first target map and a first optical parameter map, the first optical parameter map comprising values of an optical parameter of the first of the at least two optical lenses at a plurality of control points, the first target map comprising first target values of the optical parameter at the plurality of the control points,
- the second of the at least two error maps is associated with a second of the at least two optical lenses, the second error map being determined by subtracting a second target map and a second optical parameter map, the second optical parameter map comprising values of an optical parameter of the second of the at least two optical lenses at the plurality of the control points, the second target map comprising second target values of the optical parameter at the plurality of the control points; and/or
- the optical parameter of the first of the at least two optical lenses comprises parameters representing optical powers of the first of the at least two optical lenses at the plurality of the control points and/or the optical parameter of the second of the at least two optical lenses comprising parameters representing optical powers of the second of the at least two optical lenses at the plurality of the control points; and/or
- the parameters representing the optical powers of the first of the at least two optical lenses at the plurality of the control points are characterized by a mean sphere, a mean cylinder and/or a mean axis and/or the optical powers of the second of the at least two optical lenses at the plurality of the control points are characterized by a mean sphere, a mean cylinder and/or a mean axis; and/or
- the method is configured to average the first updated error map and the second updated error map by averaging, for at least one of the control points, a value at the at least one of the control points of the first updated error map and a value at the at least one of the control points of the second updated error map; and/or
- the averaging of a value at the at least one of the control points of the first updated error map and a value at the at least one of the control points of the second updated error map is based on a weighting sum taking into account a first quality score associated with the first updated error map and a second quality score associated with the second updated error map; and/or
- the optical lens is a single vision lens or a progressive addition lens or a multifocal lens; and/or
- the distance between two control points is greater than or equal to 1 µm and smaller than or equal to 30 mm; and/or
- the at least one surfacing defect in the first of the at least two error maps comprises first surfacing rings and/or first center defects and/or wherein the at least one surfacing defect in the second of the at least two error maps comprises second surfacing rings and/or second center. defects; and/or
- the method is configured to:
   - compare the value of the optical parameter at at least some of the control points with an optical parameter withdraw threshold, and
   - withdraw from the averaging of the updated error maps the updated error map that have an optical parameter at at least some of the control points greater than or equal to the optical parameter withdraw threshold; and/or
- the method is configured to
   - compare the value of the optical parameter at at least some of the control points with an optical parameter correction threshold
   - prior to averaging of the updated error maps, correct the updated error map that have an optical parameter at at least some of the control points greater than or equal to the optical parameter correction threshold.

### BRIEF DESCRIPTION OF THE DRAWINGS

Embodiments of the disclosure will now be described, by way of example only, and with reference to the following drawings in which:
- Figure 1 illustrates a system for determining a signature of an optical lens machining process,
- Figure 2 illustrates a system for compensating a signature of an optical lens machining process and comprising a system for determining the signature of an optical lens machining process,
- Figure 3 is a flowchart of a method for determining an optical lens machining process signature, and
- Figure 4 is a flowchart of a method for controlling an optical lens machining process.

Elements in the figures are illustrated for simplicity and clarity and have not necessarily been drawn to scale. For example, the dimensions of some of the elements in the figure may be exaggerated relative to other elements to help to improve the understanding of the embodiments of the present disclosure.

### DETAILLED DESCRIPTION

The disclosure relates to the field of the manufacturing system and manufacturing methods of optical lenses. More precisely it concerns systems and methods to determine a signature of an optical lens machining process. The signature process is the default created by the process, without any accident. Moreover, the disclosure relates to systems and methods to compensate such reproducible surface defect during the manufacturing process.

The disclosure relates to a system for determining a signature of an optical lens machining process. According to the disclosure, the machining process refers to a surfacing process of the optical lens but can refer to other types of machining.

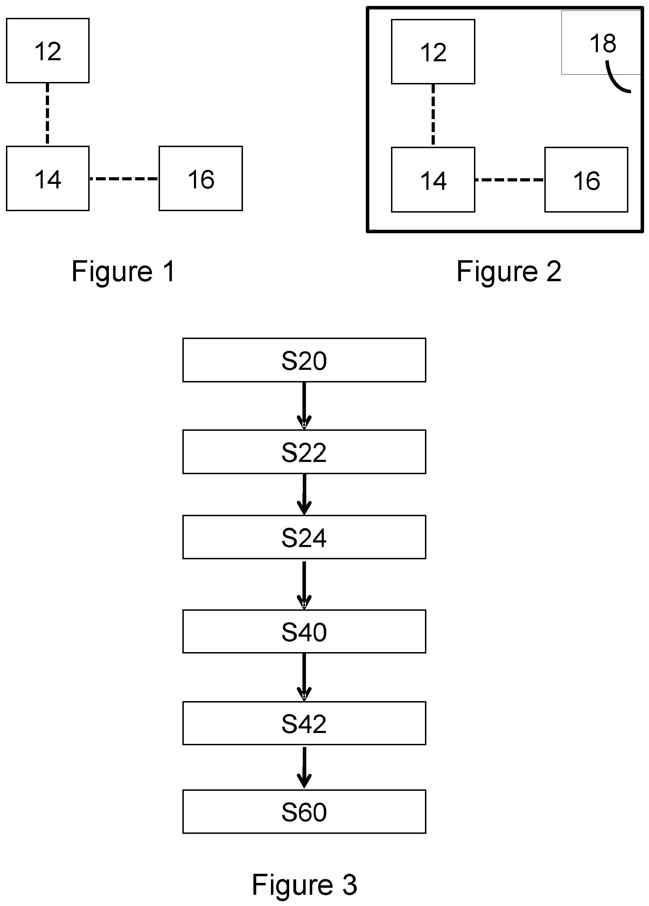

In the context of the present disclosure, the term "optical lens" can refer to a spectacle optical lens, for example edged to fit a specific spectacle frame or an ophthalmic lens, or an optical device adapted to be positioned on the optical lens. The optical device may be positioned on the front or back surface of the optical lens. The optical device may be an optical patch or film. The optical device may be adapted to be removably positioned on the optical lens for example a clip configured to be clipped on a spectacle frame comprising the optical lens. As illustrated on figure 1, the system according to the disclosure may comprises:
- a input 12 which comprises at least one parameter of an optical lens measured at a plurality of control points of the optical lens and configured to be sent to a memory 14,
- a memory 14 storing computer executable codes and configured to store the input 12, and
- a processor 16 configured to execute the stored computer executable codes so as to produce an optical parameter map of the optical lens based on the input 12.

The memory 14 is further configured to store a first target map and a second target map, the first target map comprising first target values of the optical parameter at the plurality of the control points, the second target map comprising second target values of the optical parameter at the plurality of the control points. In some embodiments the first target error map and the second target error map are identical.

The processor 16 is further configured to execute the stored computer executable codes so as to produce an error map of the measured optical lens determined by subtracting the first target map or the second target map and the optical parameter map.

The processer 16 is further configured to determine at least one surfacing defect in the error map.

The processor 16 is further configured to remove from the error map the at least one surfacing defect to obtain an updated error map.

The system according to the disclosure is at least configured to:
- determine:
   ∘ at least two error maps associated respectively with at least two optical lenses machined using the optical lens machining process,
   ∘ at least one surfacing defect in the first of the at least two error maps,
   ∘ at least one surfacing defect in the second of the at least two error maps,
- remove from the first of the at least two error maps the at least one surfacing defect in the first of the at least two error maps to obtain a first updated error map,
- remove from the second of the at least two error maps the at least one surfacing defect in the second of the at least two error maps to obtain a second updated error map,
- determine the signature of the optical lens machining process by averaging at least the first updated error map and the second updated error map.

The determination of the signature of an optical lens machining process is based on error maps, an error map being calculated as the difference between a theoretical optical parameter map and a measured optical parameters map at the plurality of the control points. The theoretical optical parameter map being the optical parameter map expected at the plurality of control point after the lens is machined.

The measurements of the optical parameters may be performed with a measurement device 12 on a plurality of production lenses at a plurality of control points of the lenses - at least 50 distributed over the lens, for example 100 - to determine the error map of the optical lens machined using the optical lens machining process. The measurements may be of any kind of measure. Measurements may include surface measurements and/or optical measurements.

Measurements may include optical parameters measurements. Optical parameters may include optical powers. Optical powers may include sphere and/or cylinder and/or axis. From the list of error deviation, the average powers deviations are calculated for a batch of measurements. The batch can have a variable number of lenses - at least 2, for example 100 - and can be split by any criteria. A batch is defined by criteria which may comprise mark, tint, opc, machines. In an embodiment, optical power deviations are measured for the purposes of the disclosure. The power deviations can be calculated by the equipment or with any other solution for one or several optical criteria such as sphere, cylinder, axis. The power of each control point may be characterized by a sphere value and/or a cylinder value and/or an axis value and/or angle.

The measurements may be performed after the polishing step of the machining of the optical lens.

The surface on which the measurements are made may be the whole surface of the optical lens or a part of the surface of the optical lens, for example for instance a square of 40mm by 40mm or a circle of 40 mm of diameter, which may be centered on the geometrical center or the optical center of the optical lens. The measurements may be performed on several different parts of the surface of the optical lens.

According to an embodiment, a first of the at least two error maps being associated with a first of the at least two optical lenses, the first of the at least two error maps is determined by subtracting the first target map and a first optical parameter map, the first optical parameter map comprising values of an optical parameter of the first of the at least two optical lenses at a plurality of control points, the first target map comprising first target values of the optical parameter at the plurality of the control points,

A second of the at least two error maps may be associated with a second of the at least two optical lenses, the second error map is then determined by subtracting the second target map and a second optical parameter map, the second optical parameter map comprising values of an optical parameter of the second of the at least two optical lenses at the plurality of the control points, the second target map comprising second target values of the optical parameter at the plurality of the control points.

The optical parameter of the first of the at least two optical lenses may comprise parameters representing optical powers of the first of the at least two optical lenses at the plurality of the control points and/or the optical parameter of the second of the at least two optical lenses comprising parameters representing optical powers of the second of the at least two optical lenses at the plurality of the control points.

The distance between two control points may be greater than or equal to 1 µm and smaller than or equal to 30 mm.

The optical powers of the first of the at least two optical lenses at the plurality of the control points may be characterized by a mean sphere, a mean cylinder and/or a mean axis and/or the optical powers of the second of the at least two optical lenses at the plurality of the control points are characterized by a mean sphere, a mean cylinder and/or a mean axis.

The optical lens may be a single vision lens or a progressive addition lens or a multifocal lens.

The lenses on which the measurements are performed may be adapted for the same prescription or different prescriptions. The prescription may specify the value of one or several or all parameters necessary to construct and/or dispense corrective lenses appropriate to the wearer of the lens.

The lenses on which the measurements are performed may be of the same type (for example all the lenses of the batch are single vision lenses) or of different types (for example some lenses of the batch are single vision lenses and other lenses of the batch are progressive addition lenses).

Advantageously, the disclosure allows characterizing the reliability of the same machining process when applied to different prescriptions and/or types of lenses.

Surfacing defects detection is done on the error map. The surfacing defects are then removed from the error map to obtain an updated error map comprising only the error deviation created by the machining process. Advantageously, by removing surfacing defects from the error map, it is obtained an updated error map which only contains the deviation of the machining process from the theoretical machining process. The theoretical machining process being the machining process that would lead to the production of a lens for which the realized surface measurements would be equal to the intended surface measurements for a lens without default.

Surfacing defects may include ring defects which are usually created by tools wears used during the machining process. Accidental defects may include center defects which are usually due to tool setting of the machining process. Some existing tools can be used such as Cassini tools to detect surfacing defects such as surfacing rings and center defects.

At least one surfacing defect is determined for each lens machined using the optical lens machining process. The at least one surfacing defect of each error map is removed from each said error map to obtain a plurality of updated error map. The at least one surfacing defect may be different for each lens machined using the optical lens machining process.

Detecting surfacing defect may be performed through several tests, such as detection of outliers (for example to detect a single aberrant value)

The outliers detection may be performed through several methods like:
- IQR method. The IQR method computes lower bound and upper bound to identify outliers. Any value below the lower bound and above the upper bound are considered to be outliers.
- Z-score method. The Z-score is the number of standard deviations a value of a variable is away from the variable mean.
- Distance from the mean method (Multivariate method). This method calculates the Euclidean distance of the data points from their mean and converts the distances into absolute z-scores. Any z-score greater than the pre-specified cut-off is considered to be an outlier.

More specifically, for the detection of surfacing rings, the ML model method may be performed.

The Multi-Layer (ML) model is a Convolutional Neural Networks (CNN) model, with 8 layers, trained to detect surfacing rings. The result is an evaluation of the intensity of the ring between 0 and 1. 0 means no ring, 1 very high ring.

The at least one surfacing defect in the first of the at least two error maps may comprise first surfacing rings and/or first center defects and/or wherein the at least one surfacing defect in the second of the at least two error maps comprises second surfacing rings and/or second center defects.

The signature of the optical lens machining process is determined by averaging the plurality of updated error maps, at least two updated error maps associated with at least two optical lenses.

In order to determine the signature of the optical lens machining process by averaging at least the first updated error map and the second updated error map, at least part of the control points must be the same between the different optical lenses. According to an embodiment, the control points are the same between the different optical lenses.

The distance between two control points may be greater than or equal to 1 µm and smaller than or equal to 30 mm.

The system may be configured to average the first updated error map and the second updated error map by averaging, for at least one of the control points, a value at the at least one of the control points of the first updated error map and a value at the at least one of the control points of the second updated error map.

The averaging of a value at the at least one of the control points of the first updated error map and a value at the at least one of the control points of the second updated error map may be based on a weighting sum taking into account a first quality score associated with the first updated error map and a second quality score associated with the second updated error map. For example, the weighting may be based on the value of the optical parameter at each control points in the error map. For example, different weights may be associated to the different control points of the error maps when determining the quality score.

Advantageously, the signature of the optical lens machining process can be sent to the lens calculator to compensate the manufacturing of the next production lens.

Advantageously, the signature of the optical lens machining process can be sent to the lens calculator to create a corrected surface which is send to the lens machining process unit in order to compensate the manufacturing of the next production lens.

According to an embodiment, the system is configured to:
- compare the value of the optical parameter at at least some of the control points with an optical parameter withdraw threshold, and
- withdraw from the averaging of the updated error maps the updated error map that have an optical parameter at at least some of the control points greater than or equal to the optical parameter withdraw threshold.

The control points may be associated with different thresholds. For example, control points on the periphery of the lens may have higher thresholds. For instance, the more the control point is on the periphery on the lens, the higher the threshold may be.

Advantageously, assigning different thresholds according to the zones of different interest allows prevents discarding error maps having good specifications in the zones of greater interest. The zones of greater interest may be defined according to the requirements of the machining process. According to an embodiment, the zone of greater interest is the surface which does not comprise the periphery of the lens, for instance, a square of 40mm by 40mm centered on the optical center of the geometrical center of the lens.

According to another embodiment, the system is configured to
- compare the value of the optical parameter at at least some of the control points with an optical parameter correction threshold, and
- prior to averaging of the updated error maps, correct the updated error map that have an optical parameter at at least some of the control points greater than or equal to the optical parameter correction threshold.

According to this embodiment, when the surfacing defect is detected, a correction is done by replacing the "wrong value" by a corrected value. If the defect is a on a little surface (only few points) the corrected value can be determined by averaging of the measured parameter value of the points next to the defect. The corrected value can be also determined by extrapolation of the surface.

The optical parameter correction value may be determined by calculating the average value of the optical parameter of the nearest neighbours control points or of a larger zone according to the surface of the control points greater than or equal to the optical parameter correction threshold.

Advantageously, this makes it possible to calculate an average value that is as accurate as possible by eliminating values of the neighbouring control points that are greater than or equal to the optical parameter correction threshold.

It is possible that no surfacing defect is detected in at least one of the error maps. In this case, the signature of the optical lens machining process is determined by averaging the at least one error map and the other updated error maps.

The disclosure further relates to a system 18 for compensating a signature of an optical lens machining process, comprising a system for determining the signature of an optical lens machining process, the system being configured to:
- determine
   - at least two error maps associated respectively with at least two optical lenses machined using the optical lens machining process
   - at least one surfacing defect in the first of the at least two error maps,
   - at least one surfacing defect in the second of the at least two error maps,
- remove from the first of the at least two error maps the at least one surfacing defect in the first of the at least two error maps to obtain a first updated error map,
- remove from the second of the at least two error maps the at least one surfacing defect in the second of the at least two error maps to obtain a second updated error map,
- determine the signature of the optical lens machining process by averaging at least the first updated error map and the second updated error map,
wherein the system is further configured to use the signature of the optical lens machining process to compensate the next machined lens using the same machining process such that the optical parameter map of the next lens is closer to its target map. In other words, to adapt the optical lens machining process when used to machine a third optical lens such that a third optical parameter map of the third optical lens is closer to a third target map than what the first optical parameter map is from the first target map or what the second optical parameter map is from the second target map, the third optical parameter map comprising values of an optical parameter of the third optical lens at the plurality of the control points, the third target map comprising third target values of the optical parameter at the plurality of the control points.

A system 18 for compensating a signature of an optical lens machining process and comprising a system for determining the signature of an optical lens machining process is represented in figure 2.

Advantageously, compensating the manufacturing of the machined lenses results in fewer lenses being discarded because they deviate too much from the specifications.

Advantageously, the averaging can be performed on a variable number of lens, depending on the needs of the manufacturing process. Moreover, a new averaging can be performed after each manufactured lens, the averaging being performed on the manufactured lens and all the previous manufactured lenses, in order to refine the averaging at each new manufactured lens.

Other embodiments combining the system 18 for compensating the signature of an optical lens machining process and one or several features mentioned herein above for the disclosed system for determining a signature of an optical lens machining process will be apparent to those skilled in the art upon making reference to the foregoing illustrative embodiments.

The disclosure further relates to method for determining an optical lens machining process signature, the method comprising:
- determining:
   ∘ at least two error maps associated respectively with at least two optical lenses machined using the optical lens machining process (step S20),
   ∘ at least one surfacing defect in the first of the at least two error maps (step S22),
   ∘ at least one surfacing defect in the second of the at least two error maps (step S24),
- removing from the first of the at least two error maps the at least one surfacing defect in the first of the at least two error maps to obtain a first updated error map (step S40),
- removing from the second of the at least two error maps the at least one surfacing defect in the second of the at least two error maps to obtain a second updated error map (step S42),
- determining the signature of the optical lens machining process by averaging at least the first updated error map and the second updated error map (step S60).

A flowchart of the method for determining an optical lens machining process signature is represented in figure 3.

It is possible that no surfacing defect is detected in at least one of the error maps determining steps S22 and S24. In this case, the signature of the optical lens machining process is determined by averaging the at least one error map and the other updated error maps.

Advantageously, the method allows characterizing the reliability of the machining process.

The lenses on which the measurements are performed may have the same prescription or different prescriptions.

The lenses on which the measurements are performed may be of the same type (for instance all the lens of the batch are single vision lenses) or of different types (for instance some lenses of the batch are single vision lenses and other lenses of the batch are progressive addition lenses).

Advantageously, the method allows characterizing the reliability of the same machining process when applied to different prescriptions and/or types of lenses.

Other embodiments combining the method for determining an optical lens machining process signature and one or several features mentioned herein above for the disclosed system for determining a signature of an optical lens machining process will be apparent to those skilled in the art upon making reference to the foregoing illustrative embodiments.

The disclosure further relates to a method for controlling an optical lens machining process comprising:
- machining an optical lens with the optical lens machining process (step 100),
- determining the optical lens machining process signature (step 200) comprising:
   - determining
      ∘ at least two error maps associated respectively with at least two optical lenses machined using the optical lens machining process (step 220)
      ∘ at least one surfacing defect in the first of the at least two error maps (step 222),
      ∘ at least one surfacing defect in the second of the at least two error maps (step 224),
   - removing from the first of the at least two error maps the at least one surfacing defect in the first of the at least two error maps to obtain a first updated error map (step 240),
   - removing from the second of the at least two error maps the at least one surfacing defect in the second of the at least two error maps to obtain a second updated error map (step 242),
   - determining the signature of the optical lens machining process by averaging at least the first updated error map and the second updated error map (step 260).
- recording the optical lens machining process signature (step 300),
wherein, the method further comprises:
using the signature of the optical lens machining process to compensate the next machined lens using the same machining process such that the optical parameter map of the next lens is closer to its target map. In other words, to adapt the optical lens machining process when used to machine a third optical lens such that a third optical parameter map of the third optical lens is closer to a third target map than what the first optical parameter map is from the first target map or what the second optical parameter map is from the second target map, the third optical parameter map comprising values of an optical parameter of the third optical lens at the plurality of the control points, the third target map comprising third target values of the optical parameter at the plurality of the control points.

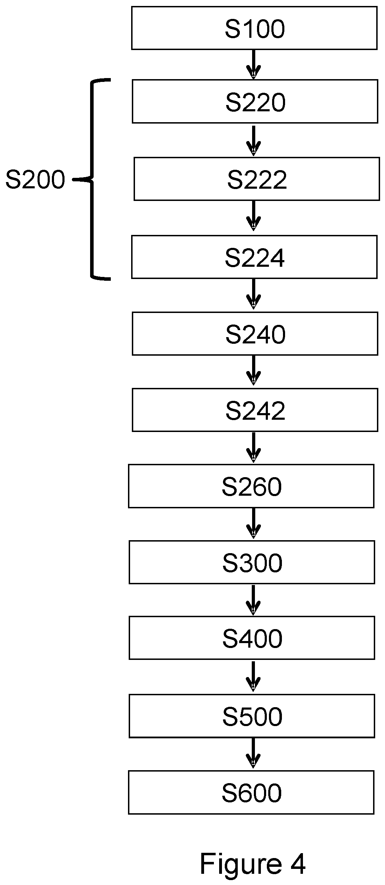

In other words, the method further comprises:
repeating regularly optical lens machining, optical lens machining process signature determining and recording steps and checking the evolution of the optical lens machining process signature over time (step 400),
- checking the evolution of at least one parameter of the machining devices used during the optical lens machining process over time (step 500), and
- relating the evolution over time of the optical lens machining process signature with the evolution over time of the at least one parameter of the machining device (step 600).
A flowchart of the method for controlling an optical lens machining process is represented in figure 4.

It is possible that no surfacing defect is detected in at least one of the error maps determining steps S222 and S224. In this case, the signature of the optical lens machining process is determined by averaging the at least one error map and the other updated error maps.

Advantageously, repeating regularly optical lens machining process signature determining allows refining the averaging over time, checking the evolution of the machining process and compensating the next machined lens using the same machining process such that the optical parameter map of the next lens is closer to its target map. In other words, to adapt the optical lens machining process when used to machine a third optical lens such that a third optical parameter map of the third optical lens is closer to a third target map than what the first optical parameter map is from the first target map or what the second optical parameter map is from the second target map, the third optical parameter map comprising values of an optical parameter of the third optical lens at the plurality of the control points, the third target map comprising third target values of the optical parameter at the plurality of the control points.

Advantageously, compensating the manufacturing of the machined lenses results in fewer lenses being discarded because they deviate too much from the specifications.

Advantageously, checking the evolution of the machining process over time allows predicting the lifetime of a machining process. Moreover, it allows making an alert if an equipment is creating a shift in optical power.

Other embodiments combining the method for controlling an optical lens machining process and one or several features mentioned herein above for the disclosed system for determining a signature of an optical lens machining process will be apparent to those skilled in the art upon making reference to the foregoing illustrative embodiments.

The disclosure further relates to a computer program product comprising one or more stored sequences of instructions that are accessible to a processor and which, when executed by the processor, causes the processor to carry out at the steps of a method for determining an optical lens machining process signature, the method comprising:
- determining:
   ∘ at least two error maps associated respectively with at least two optical lenses machined using the optical lens machining process
   ∘ at least one surfacing defect in the first of the at least two error maps,
   ∘ at least one surfacing defect in the second of the at least two error maps,
- removing from the first of the at least two error maps the at least one surfacing defect in the first of the at least two error maps to obtain a first updated error map,
- removing from the second of the at least two error maps the at least one surfacing defect in the second of the at least two error maps to obtain a second updated error map,
- determining the signature of the optical lens machining process by averaging at least the first updated error map and the second updated error map.

The disclosure further relates to a computer readable medium carrying one or more sequences of instructions of the computer program product as disclosed herein above.

Other embodiments combining the computer program product and one or several features mentioned herein above for the disclosed system for determining a signature of an optical lens machining process will be apparent to those skilled in the art upon making reference to the foregoing illustrative embodiments.

Unless specifically stated otherwise, as apparent from the following discussions, it is appreciated that throughout the specification discussions utilizing terms such as "computing", "calculating", "generating", or the like, refer to the action and/or processes of a computer or computing system, or similar electronic computing device, that manipulate and/or transform data represented as physical, such as electronic, quantities within the computing system's registers and/or memories into other data similarly represented as physical quantities within the computing system's memories, registers or other such information storage, transmission or display devices.

Embodiments of the present disclosure may include apparatuses for performing the operations herein. This apparatus may be specially constructed for the desired purposes, or it may comprise a general purpose computer or Digital Signal Processor ("DSP") selectively activated or reconfigured by a computer program stored in the computer. Such a computer program may be stored in a computer readable storage medium, such as, but is not limited to, any type of disk including floppy disks, optical disks, CD-ROMs, magnetic-optical disks, read-only memories (ROMs), random access memories (RAMs) electrically programmable read-only memories (EPROMs), electrically erasable and programmable read only memories (EEPROMs), magnetic or optical cards, or any other type of media suitable for storing electronic instructions, and capable of being coupled to a computer system bus.

The processes and displays presented herein are not inherently related to any particular computer or other apparatus. Various general-purpose systems may be used with programs in accordance with the teachings herein, or it may prove convenient to construct a more specialized apparatus to perform the desired method. The desired structure for a variety of these systems will appear from the description below. In addition, embodiments of the present disclosure are not described with reference to any particular programming language. It will be appreciated that a variety of programming languages may be used to implement the teachings of the disclosures as described herein.

Many further modifications and variations will be apparent to those skilled in the art upon making reference to the foregoing illustrative embodiments, which are given by way of example only and which are not intended to limit the scope of the disclosure, that being determined solely by the appended claims.

In the claims, the word "comprising" does not exclude other elements or steps, and the indefinite article "a" or "an" does not exclude a plurality. The mere fact that different features are recited in mutually different dependent claims does not indicate that a combination of these features cannot be advantageously used. Any reference signs in the claims should not be construed as limiting the scope of the disclosure.

## Claims

1. A system for determining a signature of an optical lens machining process, the system being configured to:
- determine:
• at least two error maps associated respectively with at least two optical lenses machined using the optical lens machining process,
• at least one surfacing defect in a first of the at least two error maps,
• at least one surfacing defect in a second of the at least two error maps,
- remove from the first of the at least two error maps the at least one surfacing defect in the first of the at least two error maps to obtain a first updated error map,
- remove from the second of the at least two error maps the at least one surfacing defect in the second of the at least two error maps to obtain a second updated error map,
- determine the signature of the optical lens machining process by averaging at least the first updated error map and the second updated error map.

2. The system according to claim 1, wherein:
• the first of the at least two error maps being associated with a first of the at least two optical lenses, the first of the at least two error maps being determined by subtracting a first target map and a first optical parameter map, the first optical parameter map comprising values of an optical parameter of the first of the at least two optical lenses at a plurality of control points, the first target map comprising first target values of the optical parameter at the plurality of the control points,
• the second of the at least two error maps being associated with a second of the at least two optical lenses, the second error map being determined by subtracting a second target map and a second optical parameter map, the second optical parameter map comprising values of an optical parameter of the second of the at least two optical lenses at the plurality of the control points, the second target map comprising second target values of the optical parameter at the plurality of the control points.

3. The system according to claim 2, wherein the optical parameter of the first of the at least two optical lenses comprising parameters representing optical powers of the first of the at least two optical lenses at the plurality of the control points and/or the optical parameter of the second of the at least two optical lenses comprising parameters representing optical powers of the second of the at least two optical lenses at the plurality of the control points.

4. The system according to claim 3, wherein parameters representing the optical powers of the first of the at least two optical lenses at the plurality of the control points are **characterized by** a mean sphere, a mean cylinder and/or a mean axis and/or the optical powers of the second of the at least two optical lenses at the plurality of the control points are **characterized by** a mean sphere, a mean cylinder and/or a mean axis.

5. The system according to any of the preceding claims, wherein the system is configured to average the first updated error map and the second updated error map by averaging, for at least one of the control points, a value at the at least one of the control points of the first updated error map and a value at the at least one of the control points of the second updated error map.

6. The system according to the preceding claim, wherein the averaging of a value at the at least one of the control points of the first updated error map and a value at the at least one of the control points of the second updated error map is based on a weighting sum taking into account a first quality score associated with the first updated error map and a second quality score associated with the second updated error map.

7. The system according to any of the preceding claims, wherein the optical lens is a single vision lens or a progressive addition lens or a multifocal lens.

8. The system according to any of the preceding claims, wherein the distance between two control points is greater than or equal to 1 µm and smaller than or equal to 30 mm.

9. The system according to any of the preceding claim, wherein the at least one surfacing defect in the first of the at least two error maps comprises first surfacing rings and/or first center defects and/or wherein the at least one surfacing defect in the second of the at least two error maps comprises second surfacing rings and/or second center defects.

10. The system according to any of the preceding claims, wherein the system is configured to:
- compare the value of the optical parameter at at least some of the control points with an optical parameter withdraw threshold, and
- withdraw from the averaging of the updated error maps the updated error map that have an optical parameter at at least some of the control points greater than or equal to the optical parameter withdraw threshold.

11. The system according to any of the preceding claims, wherein the system is configured to
- compare the value of the optical parameter at at least some of the control points with an optical parameter correction threshold, and
- prior to averaging of the updated error maps, correct the updated error map that have an optical parameter at at least some of the control points greater than or equal to the optical parameter correction threshold.

12. A system for compensating a signature of an optical lens machining process, the system being configured to:
- determine
• at least two error maps associated respectively with at least two optical lenses machined using the optical lens machining process
• at least one surfacing defect in a first of the at least two error maps,
• at least one surfacing defect in a second of the at least two error maps,
- remove from the first of the at least two error maps the at least one surfacing defect in the first of the at least two error maps to obtain a first updated error map,
- remove from the second of the at least two error maps the at least one surfacing defect in the second of the at least two error maps to obtain a second updated error map,
- determine the signature of the optical lens machining process by averaging at least the first updated error map and the second updated error map,
wherein the system is further configured to use the signature of the optical lens machining process to adapt the optical lens machining process when used to machine a third optical lens such that a third optical parameter map of the third optical lens is closer to a third target map than what the first optical parameter map is from the first target map or what the second optical parameter map is from the second target map,
the third optical parameter map comprising values of an optical parameter of the third optical lens at the plurality of the control points, the third target map comprising third target values of the optical parameter at the plurality of the control points.

13. A method for determining an optical lens machining process signature, the method comprising:
• determining:
∘ at least two error maps associated respectively with at least two optical lenses machined using the optical lens machining process,
∘ at least one surfacing defect in a first of the at least two error maps,
∘ at least one surfacing defect in a second of the at least two error maps,
• removing from the first of the at least two error maps the at least one surfacing defect in the first of the at least two error maps to obtain a first updated error map,
• removing from the second of the at least two error maps the at least one surfacing defect in the second of the at least two error maps to obtain a second updated error map,
• determining the signature of the optical lens machining process by averaging at least the first updated error map and the second updated error map.

14. A method for compensating a signature of an optical lens machining process, the method comprising:
- machining at least two optical lenses using the optical lens machining process,
- determining the optical lens machining process signature comprising:
• determining
∘ at least two error maps associated respectively with the at least two optical lenses machined using the optical lens machining process
∘ at least one surfacing defect in a first of the at least two error maps,
∘ at least one surfacing defect in a second of the at least two error maps,
• removing from the first of the at least two error maps the at least one surfacing defect in the first of the at least two error maps to obtain a first updated error map,
• removing from the second of the at least two error maps the at least one surfacing defect in the second of the at least two error maps to obtain a second updated error map,
• determining the signature of the optical lens machining process by averaging at least the first updated error map and the second updated error map.
- recording the optical lens machining process signature,
wherein, the method further comprises:
- using the signature of the optical lens machining process to adapt the optical lens machining process when used to machine a third optical lens such that a third optical parameter map of the third optical lens is closer to a third target map than what the first optical parameter map is from the first target map or what the second optical parameter map is from the second target map,
the third optical parameter map comprising values of an optical parameter of the third optical lens at the plurality of the control points, the third target map comprising third target values of the optical parameter at the plurality of the control points.

15. A computer program product comprising one or more stored sequences of instructions that are accessible to a processor and which, when executed by the processor, causes the processor to carry out at the steps of a method for determining a signature of an optical lens machining process, the method comprising:
• determining:
∘ at least two error maps associated respectively with at least two optical lenses machined using the optical lens machining process
∘ at least one surfacing defect in a first of the at least two error maps,
∘ at least one surfacing defect in a second of the at least two error maps,
• removing from the first of the at least two error maps the at least one surfacing defect in the first of the at least two error maps to obtain a first updated error map,
• removing from the second of the at least two error maps the at least one surfacing defect in the second of the at least two error maps to obtain a second updated error map,
• determining the signature of the optical lens machining process by averaging at least the first updated error map and the second updated error map.
